# EUROPÄISCHE PATENTSCHRIFT

(11) **EP 2 766 226 B1**
(45) Veröffentlichungstag und Bekanntmachung des Hinweises auf die Patenterteilung: **03.08.2016**
(21) Anmeldenummer: 12778213.4
(22) Anmeldetag: 14.09.2012
(51) Int. Cl.: B60R 9/045

(54) **DACHLASTENTRÄGER FÜR KRAFTFAHRZEUGE**
ROOF CARRIER FOR VEHICLES
GALERIE POUR VÉHICULES AUTOMOBILES

(30) Priorität: 14.09.2011 DE 102011053604
(43) Veröffentlichungstag der Anmeldung: 20.08.2014
(73) Patentinhaber: JAC Products Europe GmbH, 42285 Wuppertal (DE)
(72) Erfinder: RAHM, Werner, 42281 Wuppertal (DE); MEISS, Ander, 42659 Solingen (DE)
(74) Vertreter: Bungartz Christophersen Partnerschaft mbB Patentanwälte
(86) Internationale Anmeldenummer: PCT/DE2012/100279
(87) Internationale Veröffentlichungsnummer: WO 2013/037365

(56) Entgegenhaltungen:
- EP-A2- 1 612 105
- WO-A1-96/24509
- FR-A1- 2 879 536
- US-A- 5 845 828

## Beschreibung

Die Erfindung betrifft einen Dachlastenträger für Kraftfahrzeuge mit einem sich zwischen zu beiden Seiten längs des Fahrzeugdachs dachfest angeordneten Relingleisten erstreckenden Querträger, der sich aus einem horizontalen Profilstab und an dessen Enden längsverschieblich in Bezug auf den Profilstab angeordneten Stützfüßen zusammensetzt, wobei Bestandteile jedes Stützfußes Spannbacken sind, die mittels einer Spanneinrichtung unter Festspannen der Relingleiste zueinander beweglich sind, wobei Bestandteil der Spanneinrichtung ein aus einem Exzenter und einem quer zu dessen Exzenterachse angeordneten Handgriff bestehender Exzenterhebel ist.

Für die Befestigung von Querträgern zur Aufnahme von Dachlasten sind viele Kraftfahrzeuge mit Dachrelingsystemen versehen. Fahrzeugseitig bestehen diese aus zwei in Fahrzeuglängsrichtung verlaufenden Relingleisten, die entweder über zwei oder mehr Relingfüße abgestützt einen gewissen Abstand zur Außenseite des Fahrzeugdachs aufweisen, oder die abstandslos direkt auf der Dachaußenseite befestigt oder im Blech der Dachhaut sogleich mit angeformt sind. Auf die Relingleisten sind Querträger aufsetzbar, wobei sich jeder Querträger mit einem ersten Stützfuß an der linken, und mit einem zweiten Stützfuß an der rechten Relingleiste abstützt.

Ein solcher Dachlastenträger ist z. B. aus der WO 96/24509 bekannt. Dessen Querträger setzt sich aus einem horizontalen Profilstab und den an dessen Enden längsverschieblich angeordneten Stützfüßen zusammen. An jedem Stützfuß befinden sich zwei Spannbacken, die von zwei unterschiedlichen Seiten her gegen die Relingleiste anlegbar sind. Um hierbei eine ausreichende Klemmung zu erzielen, sind die Spannbacken mittels einer Spanneinrichtung unter Einspannen der Relingleiste aufeinander zu beweglich. Das Aufbringen der Spannkraft erfolgt mit Hilfe eines aus einem Exzenter und einem quer zu dessen Exzenterachse angeordneten Handgriff bestehenden Exzenterhebels. Durch Schwenken des Handgriffs kommt es über den Exzenter zum Aufbau einer Zugkraft, welche die beiden Spannbacken aufeinander zu bewegt und so einen kraftschlüssigen Verbund mit der jeweiligen Relingleiste herbeiführt. Je größer die Exzentrizität des Hebels ist, desto stärker ist zwar dieser Verbund. Andererseits reduziert sich mit größer werdender Exzentrizität der über den Handgriff aufzubringende Schwenkwinkel, was wiederum mit größerem Kraftaufwand einhergeht. Die erforderliche Kraft ließe sich zwar durch eine größere Hebellänge des Handgriffs verringern, jedoch ist der hierfür notwendige Schwenkraum im Bereich eines Dachträger-Stützfußes bereits deshalb nicht vorhanden, da der Querträger einschließlich seiner Stützfüße quer zum Fahrtwind angeordnet ist, und daher bei modernen Dachlastenträgern kompakt und aerodynamisch gestaltet sein muss.

Ziel der Erfindung ist es daher, bei einem Dachlastenträger für Kraftfahrzeuge zu einer sowohl bedienerfreundlichen als auch kompakten, platzsparenden Anordnung der Elemente der Spanneinrichtung zu kommen.

Zur **Lösung** ist ein Dachlastenträger für Kraftfahrzeuge mit den eingangs angegebenen Merkmalen dadurch gekennzeichnet, dass der Exzenterhebel zweiteilig ist und sich aus einem Grundkörper, an dem der Exzenter ausgebildet ist, und einem Verlängerungsarm, an dem der Handgriff ausgebildet ist, zusammensetzt. Zur Verlängerung der wirksamen Hebellänge des Exzenterhebels kann der Verlängerungsarm zum Beispiel beweglich an dem Grundkörper gelagert sein, oder er ist an den Grundkörper ansetzbar ausgebildet.

Ein Dachlastenträger mit diesen Merkmalen zeichnet sich dadurch aus, dass das manuelle Bedienen der Spanneinrichtung bedienerfreundlich ist, da die für den Spannvorgang aufzubringende Kraft nicht übermäßig groß ist. Der hierfür eingesetzte Exzenterhebel ist zwar von kompakter Grundbauart, er erlaubt jedoch auf einfache Art und Weise eine Verlängerung der wirksamen Hebellänge und damit eine Betätigung der Spanneinrichtung mit vergleichsweise geringer Handkraft. Trotz der großen möglichen Hebellänge baut die so gestaltete Spanneinrichtung kompakt und platzsparend, so dass auch der Stützfuß des Querträgers nicht voluminöser als üblich ist. Dies ist wichtig, da der Querträger einschließlich seiner Stützfüße quer zum Fahrtwind angeordnet ist, und er daher kompakt und dadurch auch aerodynamisch gestaltet sein sollte.

Gemäß einer bevorzugten Ausgestaltung ist der Verlängerungsarm teleskopierbar in dem Grundkörper geführt und aus diesem herausziehbar. Um Hebelkraft aufzubringen, wird der Verlängerungsarm ergriffen, und in einer Längsbewegung aus dem Grundkörper herausgezogen. Ein eingebauter Stopper verhindert, dass der Verlängerungsarm versehentlich ganz abgezogen wird und seine Verbindung mit dem Grundkörper verliert. Einmal ausgezogen, bietet der Verlängerungsarm eine Handhabe, mit der sich der Exzenterhebel mit vergrößertem Hebelmoment bedienen, und sich die Spanneinrichtung daher kraftschonend betätigen lässt.

Gemäß einer alternativen Ausgestaltung ist der Verlängerungsarm verschwenkbar mit dem freien Ende des Grundkörpers verbunden und aus einer Ruhestellung, in der beide Arme Seite an Seite nebeneinander liegen, bis in eine Hebelstellung ausschwenkbar, in der der Verlängerungsarm in Fortsetzung des Grundkörpers angeordnet ist.

Ausführungsbeispiele eines Dachlastenträgers werden im Folgenden anhand der zugehörigen Zeichnungen erläutert. Darin zeigen:
- Fig. 1: einen Längsschnitt durch den Querträger eines Dachlastenträgers im Bereich des einen Stützfußes des Querträgers in festgespanntem Zustand und mit aufgesetzter Schutzkappe;
- Fig. 2: die Gegenstände nach Fig. 1 in gelöstem, also nicht festgespanntem Zustand und ohne die Schutzkappe;
- Fig. 3: eine zweite Ausführungsform eines Exzenterhebels;
- Fig. 4: eine dritte Ausführungsform des Exzenterhebels und
- Fig. 5: eine vierte Ausführungsform des Exzenterhebels.

Auf einem Fahrzeugdach 2 befestigt ist zu beiden Längsseiten des Fahrzeugdachs jeweils eine Relingleiste 1, wobei auf den Zeichnungen nur der rechte Rand des Fahrzeugdachs 2 wiedergegeben ist und daher auch nur die dort befestigte Relingleiste 1. Bestandteile des Dachlastenträgers sind außerdem ein quer über das Fahrzeugdach 2 angeordneter Profilstab 3 sowie ein an dessen Ende längsverschieblich in Bezug auf den Profilstab 3 angeordneter Stützfuß 5. Der Stützfuß 5 bildet die lösbare Verbindung zwischen dem Profilstab 3 und der jeweiligen Relingleiste 1. Auf dem Profilstab 3, vorzugsweise einem Aluminiumprofil, lassen sich in üblicher Weise Anbauteile befestigen, wie Fahrradträger, Gepäckträger, Tragesysteme für Surfbretter etc..

Zur Befestigung der aus dem Profilstab 3 und den beiden Stützfüßen 5 bestehenden Querträgers ist Bestandteil des vorzugsweise aus Kunststoff bestehenden Stützfußes 5 eine Spanneinrichtung 40. Mit dieser lassen sich zwei Spannbacken 20, 30 so vom fahrzeugaußen und fahrzeuginnen her gegen die Relingleiste 1 klemmen, dass es zu einem festen Halt des Stützfußes 5 an der Relingleiste 1 kommt. Dieser Halt sollte auch in Längsrichtung der Relingleiste 1 ausreichend sein, um den Querträger auch bei erheblichen an dem Querträger befestigten Lasten, wie z. B. Fahrrädern sicher zu halten.

Zur Anpassung der wirksamen Länge des Querträgers ist der Stützfuß 5 längsverschieblich gegenüber dem Profilstab 3. Zu diesem Zweck ist Bestandteil des Stützfußes 5 unter anderem ein daran befestigter Führungsblock 11, der von unten her in einer Längsöffnung 13 im Boden 14 des Profilstabs 3 sitzt. Die Breite des Führungsblocks 11 ist im Wesentlichen gleich der Breite der Längsöffnung 13, so dass sich der Führungsblock 11 und damit der Stützfuß 5 in Richtung der Längsöffnung 13 verschieben lässt, und sich so die Längsposition des Stützfußes 5 relativ zu dem Profilstab 3 verändern lässt. Dasselbe gilt selbstverständlich auch für den am anderen Ende des Profilstabs 3 angeordneten, zweiten Stützfuß.

Jeder Stützfuß 5 ist fahrzeugaußen mit einer im Wesentlichen vertikalen Bohrung 22 versehen, in der ein Bolzen 26 sitzt. Der Bolzen 26 führt außer durch die Bohrung 22 noch durch eine Bohrung in einem Träger 23 hindurch, der Bestandteil der Spannbacke 20 ist. Bestandteil der Spannbacke 20 ist ferner ein Formteil 24, welches an dem Träger 23 befestigt ist, und dessen Material weicher ist, als das Material des Trägers. Vorzugsweise besteht der Träger 23 der Spannbacke 20 aus einem relativ harten Kunststoff, hingegen das Formteil 24 aus einem im Vergleich weicheren Kunststoff. Die Kontur von Träger 23 und Formteil 24 ist bei dem hier beschriebenen Ausführungsbeispiel an die entsprechende Außenkontur der Relingleiste 1 angepasst. Die Zeichnungen lassen insbesondere erkennen, wie Träger 23 und Formteil 24 mit Vorsprüngen gestaltet sind, die in eine entsprechend gestaltete Längsnut an der Außenseite der Relingleiste 1 formschlüssig hineinpasst.

Entscheidend ist, dass die Spannbacke 20 nicht fest bzw. starr in dem Stützfuß 5 sitzt, sondern die Spannbacke 20 um eine durch den Bolzen 26 gebildete, vertikale Achse 21 schwenkbeweglich an bzw. in dem Stützfuß 5 gelagert ist.

Um die auf die Spannbacke 20 und den Bolzen 26 einwirkende Biegebelastung gering zu halten, setzt sich die den Bolzen 26 aufnehmende Bohrung 22 des Stützfußes 5 aus einem oberen Bohrungsabschnitt über dem Träger 23, und aus einem unteren Bohrungsabschnitt unter dem Träger 23 zusammen. Zwischen diesen beiden Bohrungsabschnitten befindet sich im Material des Stützfußes 5 ein Freiraum 27, welcher durch den Träger 23 weitgehend ausgefüllt ist. Der Träger 23 ist in diesem Freiraum 27 soweit gefangen als er, mit Ausnahme der gewünschten Schwenkbeweglichkeit um die Achse 21, keine nennenswerten Bewegungen durchführen kann.

Die zweite Spannbacke 30 befindet sich auf der anderen, hier der nach fahrzeuginnen weisenden Seite der Relingleiste 1. Herstellungstechnisch vorteilhaft ist die zweite Spannbacke 30 als einstückiges Winkelblech mit einem kurzen Schenkel 32 und einem hierzu in etwa rechtwinkligen langen Schenkel 33 ausgebildet. Der kurze Schenkel 32 nimmt eine vertikale Achse 31 auf, um die die zweite Spannbacke 30 schwenkbeweglich in Bezug auf den Stützfuß 5 gelagert ist. Auch die Achse 31 wird durch einen Bolzen 36 gebildet, wobei der Bolzen 36 eine vertikale Bohrung in dem kurzen Schenkel 32 durchsetzt, und ebenso eine hierzu fluchtende Bohrung in einem Klemmelement 35. Die innere Spannbacke 30 ist daher nicht unmittelbar am Material des Stützfußes 5, sondern an dem zusätzlichen Klemmelement 35 befestigt, ist jedoch in Bezug auf dieses Klemmelement 35 und damit auch in Bezug auf den Stützfuß 5 um die vertikale Achse 31 schwenkbeweglich gelagert.

Das Klemmelement 35 ist längsbeweglich in dem Profilstab 3 geführt. Das Klemmelement 35 lässt sich daher, ebenso wie der Stützfuß 5 selbst, in Längsrichtung des Profilstabs 3 verlagern.

Die Spanneinrichtung 40, mittels der die beiden Spannbacken 20, 30 parallel geführt aufeinander zu bewegbar sind, setzt sich im Wesentlichen aus einem Zugstab 41 und einem Exzenterhebel 45 zusammen. Mit seinem fahrzeuginneren Ende ist der Zugstab 41 gegen die innere Spannbacke 30 abgestützt. Diese Abstützung befindet sich an einem Ort B der zweiten Spannbacke 30, der sich zwischen dem Ort C der schwenkbeweglichen Lagerung der zweiten Spannbacke und jenem Ort A befindet, an dem die zweite Spannbacke 30 gegen die Relingstütze 1 anliegt. An dem Ort A kann die Spannbacke 30 kurze Zapfen 39 aufweisen, die für einen zusätzlichen Formschluss in napfförmige Öffnungen der Relingleiste 1 eingreifen.

Das andere, fahrzeugäußere Ende des Zugstabs 41 ist drehbar in dem Exzenterhebel 45 gelagert. Zu diesem Zweck sitzt in dem Exzenterhebel 45 ein Querbolzen 44. Gegen den Querbolzen 44 stützt sich von außen her ein radial erweitertes Ende des Zugstabs 41 ab, welches mit einem Mehrkant 41 A für den Eingriff eines Handwerkzeugs versehen ist.

Der Exzenterhebel 45 besteht aus dem eigentlichen Exzenter, hier einer als Exzenterfläche 46 gestalteten Kontur, und aus einem quer von der Exzenterachse abstehenden Handgriff 48. Der hier nockenförmige Exzenter stützt sich mit seiner Exzenterfläche 46 gegen eine im Material des Stützfußes 5 ausgebildete Druckfläche 47 ab.

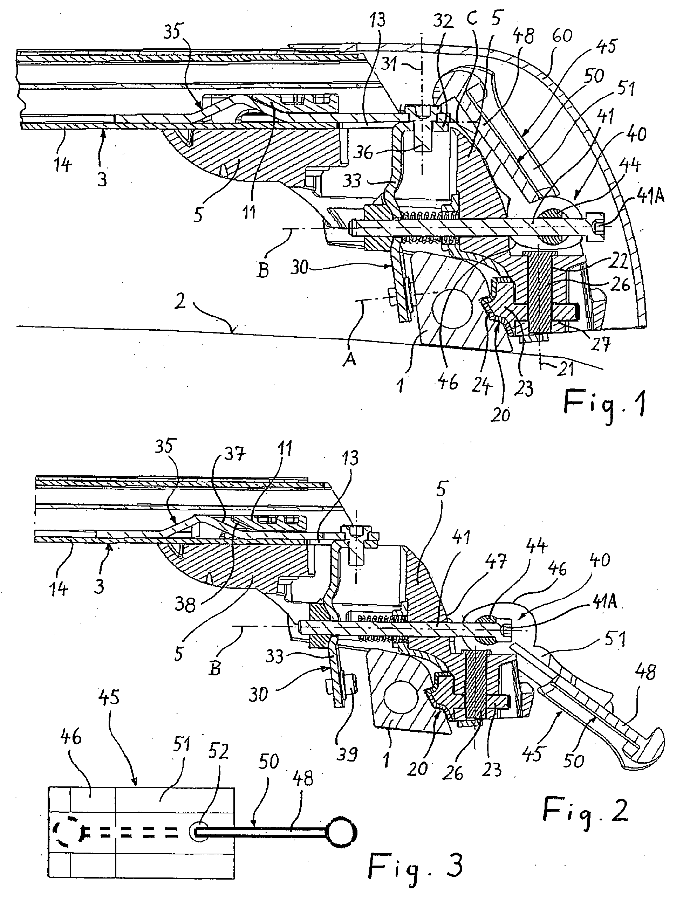

Wird, ausgehend von der Löseposition nach Fig. 2, der Exzenterhebel 45 in die Klemmposition nach Fig. 1 hoch geschwenkt, kommt es wegen der Exzentrizität zu einem nach fahrzeugaußen gerichteten Zug auf den Zugstab 41, wodurch dessen inneres Ende die innere Spannbacke 30 nach außen bewegt, bis nicht nur die äußere Spannbacke 20, sondern über die Reaktionskraft am Stützfuß 5 auch die innere Spannbacke 30 fest gegen die Relingleiste 1 anliegt, und diese kraftschlüssig zwischen den beiden Spannbacken 20, 30 eingeklemmt wird.

Um den wirksamen Hebelarm des Exzenterhebels 45 bedienerfreundlich zu verlängern, ist dieser mit einem teleskopierbaren Verlängerungsarm 50 versehen, der als Handgriff 48 dient. Der Verlängerungsarm 50 wird in Längsrichtung aus dem Grundkörper 51 des Exzenterhebels herausgezogen, um diesen zu verlängern. Der Grundkörper 51 ist hierzu mit einer Längsführung für den Verlängerungsarm 50 versehen. Ein in den Exzenterhebel eingebauter Stopper verhindert ein zu weites Ausziehen.

Nach erfolgter Befestigung gemäß Fig. 2 wird der Verlängerungsarm 50 entlang der Längsführung wieder in die Grundposition in dem Grundkörper 51 zurückgeschoben. Alternativ kann die Hebelverlängerung federbelastet sein und sich, wenn sie losgelassen wird, von selbst in den Grundkörper 51 des Exzenterhebels 45 zurückziehen.

Beim Spannen der Spanneinrichtung 40 kommt es nicht nur zu dem beschriebenen Verklemmen an der Relingleiste 1, sondern zusätzlich zu einem Verklemmen des jeweiligen Stützfußes 5 in Längsrichtung des Profilstabs 3. Das Mittel hierzu ist das Klemmelement 35, welches sowohl gegenüber dem Boden 14 des Profilstabs 3, als auch gegenüber dem Führungsblock 11 des Stützfußes 5 verklemmt. Dies wird erreicht, indem das Klemmelement 35 eine Rampe 37 aufweist, die sich an einer starr an dem Führungsblock 11 oder direkt an dem Stützfuß 5 ausgebildeten Gegenrampe 38 abstützt. Im Ergebnis wird allein durch das Spannen des Exzenterhebels 45 sowohl das Verklemmen zwischen Stützfuß und Relingleiste 1, als auch das Verklemmen zwischen Stützfuß und Profilstab 3 erzielt.

Zum Schutz des Stützfußes 5 und insbesondere dessen Spanneinrichtung 40 ist an dem Stützfuß 5 eine Abdeckung 60 befestigbar. Die Abdeckung 60 lässt sich abnehmen oder wegschwenken, um besser an den Exzenterhebel 45 zu gelangen. Ferner ist die Abdeckung 60 mittels eines Schlosses verschließbar.

In Fig. 3 ist eine zweite Ausführungsform des Exzenterhebels 45 wiedergegeben. Bei dieser Bauart ist der Exzenterhebel nicht durch eine Längsbewegung teleskopierbar, vielmehr ist der den wirksamen Hebelarm verlängernde Verlängerungsarm 50 in einem Schwenkgelenk 52 mit dem freien Ende des Grundkörpers 51 verbunden. Die Fig. 3 zeigt die ausgeschwenkte Stellung, in welcher der Verlängerungsarm 50 in Fortsetzung des Grundkörpers 51 angeordnet ist. In der gestrichelt wiedergegebenen Ruhestellung hingegen nimmt der Verlängerungsarm 50 seine eingeschwenkte Stellung ein, in der beide Arme, d.h. der Grundkörper 51 und der Verlängerungsarm 50, in kompakter Anordnung Seite an Seite und längs zueinander angeordnet sind.

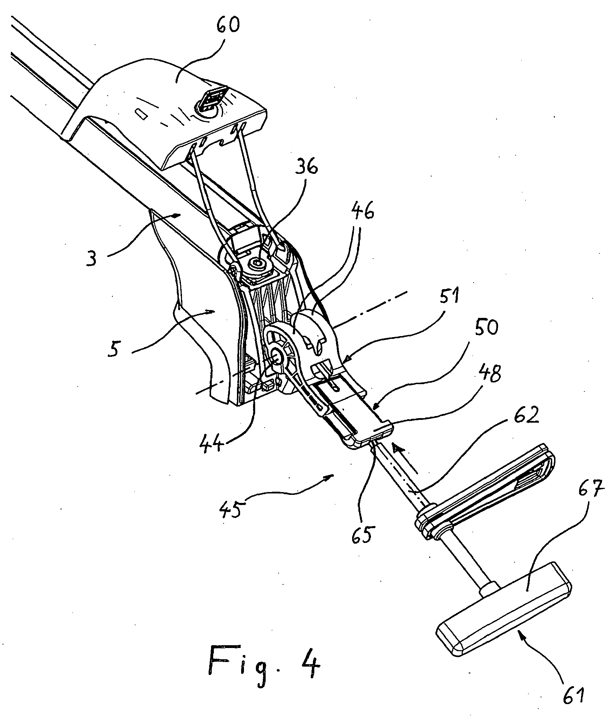

Die Fig. 4 zeigt eine dritte Ausführungsform des Exzenterhebels 45 an dem Dachlastenträger, bei der in dem wie bei Fig. 1 und bei Fig. 2 ausziehbaren Verlängerungsarm 50, dem Exzenter abgewandt, eine Öffnung in Gestalt eines tiefen Sacklochs 65 ausgebildet ist. Darin einführen und auf diese Weise einstecken lässt sich der Werkzeugschaft 62 eines Handwerkzeugs 61. Dieses bildet also nach dem Hineinführen in das Sackloch einen zweiten, zusätzlichen Verlängerungsarm mit dem Vorteil eines nochmals größeren Hebelarms. Das Sackloch 65 weist zur möglichst spielfreien Aufnahme des zylindrisch geformten Werkzeugschafts 62 eine entsprechend dimensionierte, zylindrische Wandung auf.

Das Handwerkzeug 61 ist Bestandteil des Dachlastenträgers, denn es gehört zum Lieferumfang eines gattungsgemäßen Dachlastenträgers. Es wird stets benötigt, um am Dachlastenträger vor dem Spannen des Exzenterhebels 45 das richtige, fahrzeugtypische Maß einzustellen. Zu diesem Zweck verfügt das Werkzeug 61 über einen Handgriff 67 und am anderen Ende des Werkzeugschafts 62 über einen Mehrkant-Werkzeugabschnitt zum Eingriff in einen entsprechenden Mehrkant 41 A außen an dem Zugstab 41.

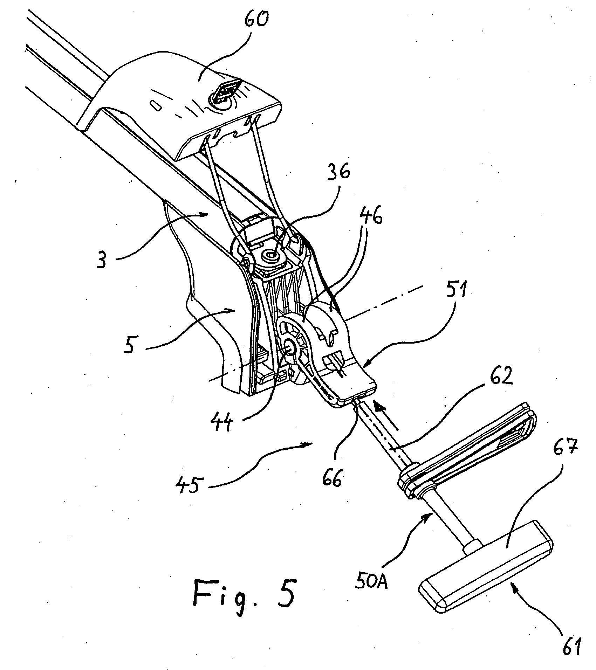

Die Fig. 5 zeigt eine vierte Ausführungsform, bei der der Grundkörper 51, dem Exzenter abgewandt, mit einer Öffnung in Gestalt eines tiefen Sacklochs 66 versehen ist. In das Sackloch 66 ist als Verlängerungsarm 50A unmittelbar der Werkzeugschaft 62 des in Verbindung mit Fig. 4 beschriebenen Handwerkzeugs 61 einsteckbar.

### Bezugszeichenliste

- 1: Relingleiste
- 2: Fahrzeugdach
- 3: Profilstab
- 5: Stützfuß
- 11: Führungsblock
- 13: Längsöffnung
- 14: Boden des Profilstabs
- 20: Spannbacke
- 21: Achse
- 22: Bohrung
- 23: Träger
- 24: Formteil
- 26: Bolzen
- 27: Freiraum
- 30: Spannbacke
- 31: Achse
- 32: kurzer Schenkel
- 33: langer Schenkel
- 35: Klemmelement
- 36: Bolzen
- 37: Rampe
- 38: Gegenrampe
- 39: Zapfen
- 40: Spanneinrichtung
- 41: Zugstab
- 41 A: Mehrkant
- 44: Querbolzen
- 45: Exzenterhebel
- 46: Exzenterfläche
- 47: Druckfläche
- 48: Handgriff
- 50: Verlängerungsarm
- 50A: Verlängerungsarm
- 51: Grundkörper
- 52: Schwenkgelenk
- 60: Abdeckung
- 61: Handwerkzeug
- 62: Werkzeugschaft
- 65: Sackloch, Öffnung
- 66: Sackloch, Öffnung
- 67: Handgriff

- A: Ort
- B: Ort
- C: Ort

## Patentansprüche

1. Dachlastenträger für Kraftfahrzeuge mit einem sich zwischen zu beiden Seiten längs des Fahrzeugdachs dachfest angeordneten Relingleisten (1) erstreckenden Querträger, der sich aus einem horizontalen Profilstab (3) und an dessen Enden längsverschieblich in Bezug auf den Profilstab (3) angeordneten Stützfüßen (5) zusammensetzt, wobei Bestandteile jedes Stützfußes (5) Spannbacken (20, 30) sind, die mittels einer Spanneinrichtung (40) unter Festspannen der Relingleiste (1) zueinander beweglich sind, wobei Bestandteil der Spanneinrichtung (40) ein aus einem Exzenter und einem quer zu dessen Exzenterachse angeordneten Handgriff (48; 67) bestehender Exzenterhebel (45) ist, **dadurch gekennzeichnet, dass** der Exzenterhebel (45) zweiteilig ist und sich aus einem Grundkörper (51), an dem einstückig der Exzenter ausgebildet ist, und einem Verlängerungsarm (50; 50A), an dem der Handgriff (48; 67) ausgebildet ist, zusammensetzt.

2. Dachlastenträger nach Anspruch 1, **dadurch gekennzeichnet, dass** der Verlängerungsarm (50) zur Verlängerung der wirksamen Hebellänge des Exzenterhebels (45) beweglich an dem Grundkörper (51) gelagert ist.

3. Dachlastenträger nach Anspruch 2, **dadurch gekennzeichnet, dass** der Verlängerungsarm (50) teleskopierbar in dem Grundkörper (51) geführt und aus diesem herausziehbar ist.

4. Dachlastenträger nach Anspruch 2, **dadurch gekennzeichnet, dass** der Verlängerungsarm (50) verschwenkbar mit dem freien Ende des Grundkörpers (51) verbunden ist und aus einer Ruhestellung, in der der Grundkörper (51) und der Verlängerungsarm (50) längs zueinander angeordnet sind, bis in eine Hebelstellung ausschwenkbar ist, in der der Verlängerungsarm (50) in Fortsetzung des Grundkörpers (51) angeordnet ist.

5. Dachlastenträger nach einem der Ansprüche 2 bis 4, **dadurch gekennzeichnet, dass** der Verlängerungsarm (50), dem Exzenter abgewandt, mit einer Öffnung (65) zum Einstecken eines einen zweiten Verlängerungsarm bildenden Werkzeugschafts (62) eines Handwerkzeugs (61) zum Einstellen des Dachlastenträgers versehen ist.

6. Dachlastenträger nach Anspruch 1, **dadurch gekennzeichnet, dass** der Verlängerungsarm (50A) zur Verlängerung der wirksamen Hebellänge des Exzenterhebels (45) an den Grundkörper (51) ansetzbar ausgebildet ist.

7. Dachlastenträger nach Anspruch 6, **dadurch gekennzeichnet, dass** der Grundkörper (51), dem Exzenter abgewandt, mit einer Öffnung (66) zum Einstecken des Verlängerungsarms (50A) versehen ist, und dass der Verlängerungsarm der Werkzeugschaft (62) eines Handwerkzeugs (61) zum Einstellen des Dachlastenträgers ist.

8. Dachlastenträger nach Anspruch 5 oder 7, **dadurch gekennzeichnet, dass** an dem Handwerkzeug (61) ein Mehrkant-Werkzeugabschnitt und in dessen Verlängerung der Werkzeugschaft (62) angeformt ist, und dass die Öffnung (65; 66) zur Aufnahme des zylindrisch geformten Werkzeugschafts (62) eine entsprechende zylindrische Wandung aufweist.

9. Dachlastenträger nach Anspruch 8, **dadurch gekennzeichnet, dass** die Öffnung (65; 66) ein Sackloch ist.

## Claims

1. Roof load carrier for motor vehicles, having a cross member extending between rails (1) arranged along the vehicle roof on both sides in a manner secured to the roof, said cross member being made up of a horizontal profiled bar (3) and support feet (5) arranged at the ends of the latter so as to be longitudinally displaceable with respect to the profiled bar (3), wherein constituents of each support foot (5) are clamping jaws (20, 30) which are movable with respect to one another by means of a clamping device (40), firmly clamping the rail (1), wherein a constituent of the clamping device (40) is an eccentric lever (45) consisting of an eccentric and a handle (48; 67) arranged transversely to the eccentric axis thereof, **characterized in that** the eccentric lever (45) is in two parts and is made up of a main body (51), on which the eccentric is integrally formed, and an extension arm (50; 50A) on which the handle (48; 67) is formed.

2. Roof load carrier according to Claim 1, **characterized in that** the extension arm (50) is mounted in a movable manner on the main body (51) in order to extend the effective lever length of the eccentric lever (45).

3. Roof load carrier according to Claim 2, **characterized in that** the extension arm (50) is guided telescopically in the main body (51) and is able to be pulled out of the latter.

4. Roof load carrier according to Claim 2, **characterized in that** the extension arm (50) is connected pivotably to the free end of the main body (51) and is pivotable from a rest position, in which the main body (51) and the extension arm (50) are arranged one along the other, into a lever position, in which the extension arm (50) is arranged in continuation of the main body (51).

5. Roof load carrier according to one of Claims 2 to 4, **characterized in that** the extension arm (50) is provided, away from the eccentric, with an opening (65) for plugging in a tool shank (62), forming a second extension arm, of a hand tool (61) for adjusting the roof load carrier.

6. Roof load carrier according to Claim 1, **characterized in that** the extension arm (50A) is configured to be attachable to the main body (51) in order to extend the effective lever length of the eccentric lever (45).

7. Roof load carrier according to Claim 6, **characterized in that** the main body (51) is provided, away from the eccentric, with an opening (66) for plugging in the extension arm (50A), and **in that** the extension arm is the tool shank (62) of a hand tool (61) for adjusting the roof load carrier.

8. Roof load carrier according to Claim 5 or 7, **characterized in that** a polygonal tool portion, and, in the extension of the latter, the tool shank (62), is integrally formed on the hand tool (61), and **in that** the opening (65; 66) for receiving the cylindrically shaped tool shank (62) has a corresponding cylindrical wall.

9. Roof load carrier according to Claim 8, **characterized in that** the opening (65; 66) is a blind hole.

## Revendications

1. Galerie pour véhicules automobiles, avec un support transversal, s'étendant entre des barres de toit (1) disposées des deux côtés le long du toit de véhicule et de façon solidaire avec celui-ci, qui se compose d'une barre profilée (3) horizontale et de pieds d'appui (5) disposés à ses extrémités, de façon mobile longitudinalement par rapport à la barre profilée (3), des mâchoires de serrage (20, 30) faisant partie intégrante de chaque pied d'appui (5) et étant mobiles l'une par rapport à l'autre au moyen d'un dispositif de serrage (40) de manière à enserrer la barre de toit (1), un levier excentrique (45) composé d'un excentrique et d'une poignée (48 ; 67) disposée transversalement à l'axe excentré de l'excentrique faisant partie du dispositif de serrage (40), **caractérisée en ce que** le levier excentrique (45) est en deux parties et se compose d'un corps de base (51), sur lequel l'excentrique est constitué d'une seule pièce, et d'un bras de prolongement (50 ; 50A) sur lequel est constituée la poignée (48 ; 67).

2. Galerie selon la revendication 1, **caractérisée en ce que** le bras de prolongement (50) est supporté de façon mobile sur le corps de base (51) afin de prolonger la longueur de levier efficace du levier excentrique (45).

3. Galerie selon la revendication 2, **caractérisée en ce que** le bras de prolongement (50) est guidé de façon télescopique dans le corps de base (51) et peut être extrait de celui-ci.

4. Galerie selon la revendication 2, **caractérisée en ce que** le bras de prolongement (50) est raccordé en pivotement à l'extrémité libre du corps de base (51) et peut pivoter à partir d'une position de repos dans laquelle le corps de base (51) et le bras de prolongement (50) sont disposés le long l'un de l'autre jusque dans une position de levier dans laquelle le bras de prolongement (50) est disposé dans le prolongement du corps de base (51).

5. Galerie selon l'une des revendications 2 à 4, **caractérisée en ce que**, pour le réglage de la galerie, le bras de prolongement (50) est, côté éloigné de l'excentrique, muni d'une ouverture (65) pour l'insertion d'une tige d'outil (62) d'un outil à main (61) formant un deuxième bras de prolongement.

6. Galerie selon la revendication 1, **caractérisée en ce que** le bras de prolongement (50A) destiné à prolonger la longueur de levier efficace du levier excentrique (45) est constitué de façon à pouvoir être appliqué sur le corps de base (51).

7. Galerie selon la revendication 6, **caractérisée en ce que** le corps de base (51), côté éloigné de l'excentrique, est muni d'une ouverture (66) pour l'insertion du bras de prolongement (50A), et **en ce que** le bras de prolongement est la tige d'outil (62) d'un outil manuel (61) destiné à régler la galerie.

8. Galerie selon la revendication 5 ou 7, **caractérisée en ce que**, sur l'outil manuel (61), il est formé un tronçon d'outil polygonal et, dans le prolongement de celui-ci, la tige d'outil (62), et **en ce que** l'ouverture (65 ; 66) présente, pour loger la tige d'outil (62) de forme cylindrique, une paroi cylindrique correspondante.

9. Galerie selon la revendication 8, **caractérisée en ce que** l'ouverture (65 ; 66) est un trou borgne.
